# EUROPEAN PATENT SPECIFICATION

(11) **EP 0 383 875 B1**
(45) Date of publication and mention of the grant of the patent: **03.02.1993**
(21) Application number: 89908479.2
(22) Date of filing: 14.07.1989
(51) Int. Cl.: B29B 11/14, B29C 67/20, C08J 9/32, E04B 1/84

(54) **A METHOD FOR THE MANUFACTURE OF A POLYMERIC MATERIAL WITH INTERNAL CAVITIES**
VERFAHREN ZUM HERSTELLEN VON EINEM POLYMEREN MATERIAL MIT INNEREN HOHLRÄUMEN
PROCEDE DE PRODUCTION D'UN MATERIAU POLYMERE PRESENTANT DES CAVITES

(30) Priority: 15.07.1988 GB 8816871
(43) Date of publication of application: 29.08.1990
(73) Proprietor: DOWTY WOODVILLE POLYMER LIMITED, Ross-on-Wye Herefordshire HR9 5NF (GB)
(72) Inventor: TAYLOR, Geoffrey, Richard, Ross-on-Wye Herefordshire HR9 7UX (GB); ALFORD, Roger, William, Ross-on-Wye Herefordshire HR9 5RL (GB)
(74) Representative: Hogg, Jeffery Keith
(86) International application number: GB8900818
(87) International publication number: WO9000465

(56) References cited:
- US-A- 3 632 703
- US-A- 4 079 162
- US-A- 4 241 806

## Description

This invention relates to the moulding of polymeric materials with internal cavities contained therein.

For a variety of applications, especially acoustic applications, it is necessary to provide a polymeric article in which is formed a number of cavities; such articles can comprise a polymer matrix within which the cavities are distributed either in uniform array or otherwise.

The production of such articles is not without difficulties. Previously, sheet-like articles have been manufactured as two separate intermediate mouldings, each one having formed in a surface thereof part cavities, which are subsequently bonded together with the respective part cavities aligned to form the desired matrix/cavity system.

US Patent No. 3632703 discloses a method of moulding an acoustic window composed of polyurethane interspersed with glass capsules.

During the manufacturing process, but before curing is completed, the polyurethane-glass capsule matrix is subjected to an externally applied pressure so as to vary the density of, and velocity of sound propagation in the finished acoustic window. The pressure serves to crush some of the glass capsules and reduce the volume of the entrapped cavities. Alternatively, the glass capsules are replaced by compliant gelatinous capsules that are compressed and distorted by the applied pressure. In both cases the capsules may contain a vacuum or a gas.

A problem with acoustic products manufactured by this process is that the glass or gelatine of the capsules causes refraction of sound a! its interfaces with the polyurethane and inner cavity and this in turn produces an acoustic mismatch. Furthermore, even when the glass capsules are broken the broken glass fragments within the cavity can cause refraction of sound.

An object of the present invention is to provide a method of moulding polymeric materials with internal cavities so as co produce products with improved acoustic properties.

According to the invention this is achieved by incorporating hollow capsules into the polymeric material, the capsules either being subsequently dissipated, or being composed of material having substantially the same density and velocity of sound propagation as the polymeric material so that the creation of any intermediate acoustically refracting layer is avoided at the interface of the polymeric material with the cavity within. the capsule.

The capsules can be dissipated by making them from substance which is absorbed or dissolved by the polymeric material either spontaneously or by means of heat or an irradiation process. Preferably, the capsules are made from hydroxyl terminated polymers such as polyurethanes or gelatines.

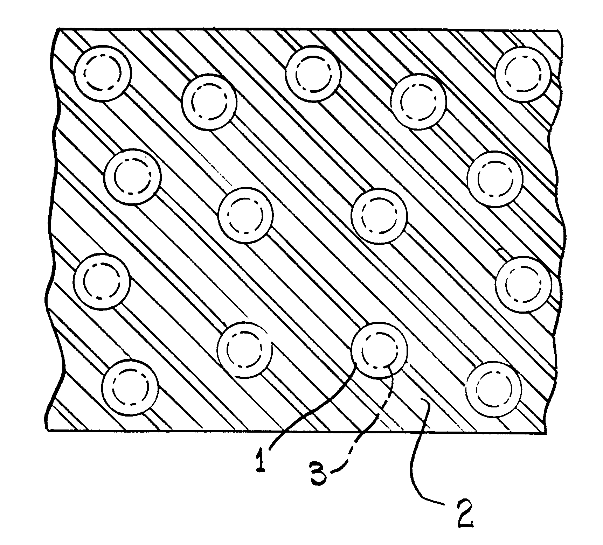

The invention will now be described by way of example with reference to the accompanying drawing which shows a cross-section of an acoustic product moulded by the method according to the invention.

A suitable polymeric material for use according to the invention is a polyurethane formed by the reaction between a first component mixture comprising polyol as a long chain polymer, a diol as a polymer cross linker, and a catalyst; and a second component being an isocyanate that is a coreactant with the first component mixture. In a particular example, the first component mixture comprises 100 parts of polybutadiene polyol, 80 parts of 2 ethyl, 1,3 hexane diol and 0.4 parts of a catalyst; and the second component comprises 189 parts of isopherone diisocyanate.

Hollow capsules filled with air are added to the first and second components of the polymeric material when these are mixed together in the liquid form during a moulting process. The capsules 1, shown in broken outline in the drawing, are thereby incorporated into the moulded polyurethane 2.

The capsules 1 are composed of a material which is soluble in the component mix of the polyurethane before curing so that they dissolve during the curing reaction, but last long enough to define cavities 3 in the final moulded component. One suitable material for the capsules is gelatine which dissolves in the polyol of the polyurethane mix. The gelatine incorporates a hardener such a formaldehyde. The amount of hardener used is selected in relation to the curing time and curing temperatures of the polyurethane, which in turn is determined by the catalyst. These materials and their characteristics are all well known in the field of polymer moulding.

In general, the thickness of the walls of the capsules is immaterial provided that it is sufficiently strong to maintain the integrity of the intended cavity shape during moulding and provided that it dissolves completely during curing.

In an alternative embodiment, the capsules may be composed of a material which is dissipaced by exposure to radiation during or after moulding. This can be a material more sensitive to microwave radiation such as a polymer with a higher hydroxyl number than the base polymer.

In yet another embodiment of the invention, the capsules (1) instead of being dissipated, may be composed of a material having the same density and velocity of sound propagation as the polymeric material (2) in which the capsules are moulded so that there is effectively no separate acoustically distinguishable layer between the polymeric material and the cavities defined by the capsules. In the above example of a polyurethane polymer, the capsules could be composed of the same polyurethane polymer.

The capsules 1 may be unitary or comprise two or more components which mate together to form the capsule. In the case of a spherical capsule as illustrated in the drawing, the capsule may be composed of two hemispheres. Other non-spherical shaped capsules may be employed, for example, oval or torpedo-shaped capsules.

The capsules 1 may either be sealed units or the interior thereof may be connected to the atmosphere. In the former case, the interior may contain air or alternatively any other substance which is to be incorporates into the final moulded product. The latter case would normally be used when air is to be incorporated into the final product.

Pressurised gas or volatile liquid may be incorporated within the capsules to maintain the shape of the capsules during moulding in particular. The nature of such incorporated substances should be compatible with the requirements of the moulded products.

Generally, as described as above, the capsules are conveniently introduced into the polymeric material prior to moulding. Once the moulding operation has ended, the cavities will then be in position in the finished article. Alternatively, and especially in the cases in which it is desirable or necessary to arrange the cavities in predetermined formation, the capsules may be held in a mould, or on a moulding surface, in that formation and polymeric material then introduced around the capsules to form the desired product.

The invention can also be applied to a moulding process in which a cavity containing layer is continuously applied to a surface from a reservoir of molten or liquid polymeric material which contains a plurality of capsules. Such a continuous process can employ an applicator into which the capsule-containing polymeric material is fed and which can move relative to the surface to allow the layer to be formed on the surface in situ.

With regard to the polymeric materials, these can be any natural or synthetic materials which can be suitably moulded but the invention is particularly appropriate to synthetic rubbers. As used herein, the term "polymeric material" includes not only a material in which polymerisation has occurred but also one in which polymerisation is subsequently effected.

The invention is particularly suitable for the production of sound absorbing articles in which the cavities assist in the absorbing characteristics. In such articles, it is preferred that the matrix is a natural rubber or a synthetic rubber having equivalent or similar sound absorption characteristics. In addition, the size and shape of the cavities may be important for the purpose of tuning the resonance of the cavities to achieve different sound absorbing characteristics.

## Claims

1. A method of moulding a polymeric material with internal cavities contained therein which comprises incorporating in the polymeric material a plurality of hollow capsules each defining an individual cavity, characterised in that the hollow capsules (1) are subsequently dissipated so that the polymeric material (2) forms a direct interface with the cavities (3).

2. A method as claimed in claim 1 in which the capsules (1) are composed of a material which is dissolved by the polymeric material (2).

3. A method as claimed in claim 2 in which the capsules (1) are dissolved whilst the polymeric material (2) is curing.

4. A method as claimed in claim 2 or 3 in which the capsules (1) are composed of hydroxyl terminated polymers.

5. A method as claimed in claim 4 in which the capsules (1) are composed of gelatine.

6. A method as claimed in claim 2 or 3 in which the polymeric material (2) and the capsules (1) are both composed of polyurethane.

7. A method as claimed in any one of the preceding claims in which heat is used to dissipate the capsules (1).

8. A method as claimed in any one of claims 1 to 6 in which radiation is used to dissipate the capsules (1).

9. A method of moulding a polymeric material with internal cavities contained therein which comprises incorporating in the polymeric material a plurality of hollow capsules each defining an individual cavity, characterised in that the capsules (1) are composed of a material having substantially the same density and velocity of sound propagation as the polymeric material (2).

10. A method as claimed in claim 9 in which the polymeric material (2) and the capsules (1) are composed of polyurethane.

11. A method as claimed in any one of the preceding claims in which the polymeric material (2) incorporating the capsules (1) is continuously applied to a surface so as to form a cavity containing layer thereon.

## Patentansprüche

1. Verfahren zum Gießen eines polymeren Materials mit inneren Hohlräumen, bei dem in das polymere Material mehrere hohle Kapseln eingebracht werden, die jeweils einen einzelnen Hohlraum bilden, dadurch gekennzeichnet, daß die hohlen Kapseln (1) anschließend zum verschwinden gebracht werden, so daß das polymere Material (2) eine unmittelbare Grenzfläche zu den Hohlräumen (3) bildet.

2. Verfahren nach Anspruch 1, bei dem die Kapseln (1) aus einem material bestehen, das durch das polymere Material (2) aufgelöst wird.

3. Verfahren nach Anspruch 2, bei dem die Kapseln (1) aufgelöst werden, während das polymere Material (2) aushärtet.

4. Verfahren nach Anspruch 2 oder 3, bei dem die Kapseln (1) aus Hydroxyl-Endgruppen-Polymeren bestehen.

5. Verfahren nach Anspruch 4, bei dem die Kapseln (1) aus Gelatine bestehen.

6. Verfahren nach Anspruch 2 oder 3, bei dem das polymere Material (1) und die Kapseln (1) beide aus Poly-urethan bestehen.

7. Verfahren nach einem der vorhergehenden Ansprüche, bei dem Wärme dazu benutzt wird, die Kapseln (1) zum Verschwinden zu bringen.

8. Verfahren nach einem der Ansprüche 1 bis 6, bei dem Strahlung dazu benutzt wird, die Kapseln (1) zum Verschwinden zu bringen.

9. Verfahren zum Gießen eines polymeren Materials mit inneren Hohlräumen, bei dem in das polymere Material mehrere hohle Kapseln eingebracht werden, die jeweils einen einzelnen Hohlraum bilden, dadurch gekennzeichnet, daß die Kapseln (1) aus einem Material bestehen, das im wesentlichen die gleiche Dichte und Schallfortpflanzungsgeschwindigkeit wie das polymere Material besitzt.

10. Verfahren nach Anspruch 9, bei dem das polymere Material (2) und die Kapseln (1) aus Polyurethan bestehen.

11. Verfahren nach einem der vorhergehenden Ansprüche, bei dem das die Kapseln (1) enthaltende polymere Material (2) kontinuierlich auf eine Fläche aufgebracht wird, um eine hohlraumenthaltende Schicht auf dieser zu bilden.

## Revendications

1. Procédé de moulage d'un matériau polymère contenant des cavités internes, qui comprend l'incorporation dans le matériau polymère d'une pluralité de capsules creuses définissant chacune une cavité individuelle, caractérisé en ce que les capsules creuses (1) sont ensuite dissipées de sorte que le matériau polymère (2) forme une interface directe avec les cavités (3).

2. Procédé selon la revendication 1, dans lequel les capsules (1) sont en un matériau qui est dissous par le matériau polymère (2).

3. Procédé selon la revendication 2, dans lequel les capsules (1) sont dissoutes pendant que le matériau polymère (2) durcit.

4. Procédé selon la revendication 2 ou 3, dans lequel les capsules (1) sont en polymères à extrémités terminales hydroxyle.

5. Procédé selon la revendication 4, dans lequel les capsules (1) sont en gélatine.

6. Procédé selon la revendication 2 ou 3, dans lequel le matériau polymère (2) et les capsules (1) sont tous deux en polyuréthanne.

7. Procédé selon l'une quelconque des revendications précédentes, dans lequel on utilise la chaleur pour dissiper les capsules (1).

8. Procédé selon l'une quelconque des revendications 1 à 6, dans lequel on utilise un rayonnement pour dissiper les capsules (1).

9. Procédé de moulage d'un matériau polymère contenant des cavités internes, qui comprend l'incorporation dans le matériau polymère d'une pluralité de capsules creuses définissant chacune une cavité individuelle, caractérisé en ce que les capsules (1) sont en un matériau ayant sensiblement la même densité et la même vitesse de propagation du son que le matériau polymère (2).

10. Procédé selon la revendication 9, dans lequel le matériau polymère (2) et les capsules (1) sont en polyuréthanne.

11. Procédé selon l'une quelconque des revendications précédentes, dans lequel le matériau polymère (2) contenant les capsules (1) est appliqué de façon continue sur une surface de façon à former sur cette dernière une couche contenant des cavités.
